(19) Europäisches Patentamt / European Patent Office / Office européen des brevets

(11) **EP 2 309 483 A1**

(12) **EUROPEAN PATENT APPLICATION**

(43) Date of publication:
**13.04.2011 Bulletin 2011/15**

(51) Int Cl.:
***G09G 3/36*** (2006.01)          ***G09G 5/04*** (2006.01)
***G09G 5/06*** (2006.01)

(21) Application number: **10153385.9**

(22) Date of filing: **11.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **28.09.2009  US 568344**

(71) Applicant: **AU Optronics Corporation Hsin-Chu (TW)**

(72) Inventors:
 • **Chien, Ming Fon**
   **Hsin-Chu (TW)**
 • **Hsu, Hao-Chung**
   **Hsin-Chu (TW)**
 • **Yeh, Szu-Che**
   **Hsin-Chu (TW)**

(74) Representative: **Lang, Christian et al**
   **LangRaible GbR**
   **Patent- und Rechtsanwälte**
   **Rosenheimerstrasse 139**
   **81671 München (DE)**

(54) **Color shift solution for dynamic contrast ratio in a liquid crystal display**

(57)    In one aspect, the present invention relates to a method of processing images. In one embodiment, the method includes the steps of processing an image having a plurality of image pixels expressed in grey level values, $GL_{IN}(i)$, of n bits in a RGB color domain so as to obtain the maximum gray level value among the gray level values of all RGB colors of the plurality of image pixels, determining a color shift compensation coefficient, $\xi_M$, according to the maximum gray level value of the image, and transforming the image into an output image having grey level values, $GL_{OUT}(i)$, that satisfies the relationship of $GL_{OUT}(I) = \xi_M \times GL_{IN}(i) \leq N$.

**100**

Fig. 1

**Description**

**FIELD OF THE INVENTION**

The present invention relates generally to image processing, and more particularly to a method of processing an image to be displayed in a liquid crystal display (LCD) with color shift free and an image signal processing system of implementing the same.

**BACKGROUND OF THE INVENTION**

An LCD is a passive display device and usually requires a backlight source to provide light for displaying an image thereon. The contrast ratio of an LCD is determined by the transmittance of the LCD. Usually, an input image to be displayed is processed to obtain the details of the input image first. Then, the brightness of the backlight source is adjusted according to the details of the input image such that the difference of two adjacent gray levels is enlarged and the image contrast is thus enhanced, so the display quality of images is improved.

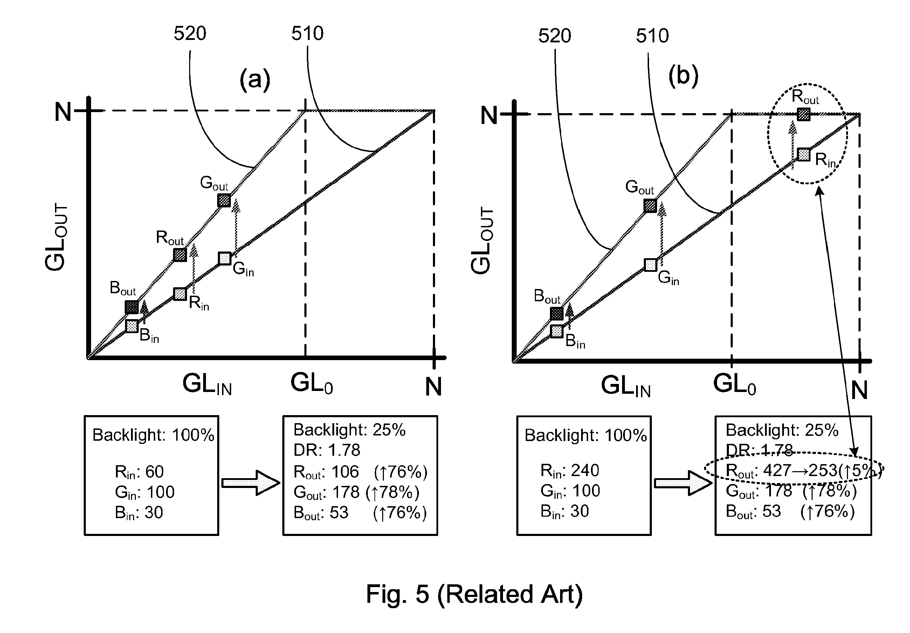

In order to increase the contrast of an input image, conventionally, the input grey level values $GL_{IN}$ of all colors of the image is multiplied by a dimming ratio (DR) so as to obtain output grey level values $GL_{OUT}$ of the image that are larger that the input grey level values $GL_{IN}$ of the image. For example, as shown in Fig. 5, DR = 1.78. If the input grey level values $GL_{IN}$ 510 for red, green and blue colors are 60, 100 and 30, respectively, the output grey level values $GL_{OUT}$ 520 for red, green and blue colors are 106, 178 and 53, respectively, as shown in Fig. 5(a). Accordingly, the contrast of the image increases. However, problems may occur in the high grey levels. As shown in Fig. 5(b), if the input grey level values $GL_{IN}$ 510 for red, green and blue colors are 240, 100 and 30, respectively, the output grey level values $GL_{OUT}$ 520 for red, green and blue colors are 427, 178 and 53, respectively. Obviously, the red color is overflowed since the highest grey level in an 8-bit image is about 255. Generally, any input grey level larger then $GL_0$ would be overflowed after this transformation. Accordingly, different levels of brightness in the image or the colors previously distinguishable can no longer be distinguished in the original levels of brightness or color deviations after the image or the colors are adjusted to full brightness, causing the phenomena of overflow of the saturated gray scale.

Therefore, a heretofore unaddressed need exists in the art to address the aforementioned deficiencies and inadequacies.

**SUMMARY OF THE INVENTION**

The present invention, in one aspect, relates to a method of processing images in a liquid crystal display (LCD). In one embodiment, the method includes the steps of inputting an image to be displayed on the LCD, where the input image comprises a plurality of image pixels, each image pixel is expressed in a first color domain characterized with red, green and blue (RGB) colors, and each color is expressed in a grey level value, $GL_{IN}(i)$, of n bits, where $GL_{IN}(i) = 0, 1, ...$ or N, i = R, G or B, $N = (2^n-1)$, and n is an integer greater than zero, determining the maximum gray level value, MAX(R, G, B), among the gray level values of all RGB colors of the plurality of image pixels, selecting a color shift compensation coefficient, $\xi_M$, corresponding to the maximum gray level value MAX(R, G, B) from a lookup table (LUT), where $\xi_M \times$MAX(R, G, B) $\leq$ N, and transforming the grey level value $GL_{IN}(i)$ of the input image into a grey level value, $GL_{OUT}(i)$, of an output image, where $GL_{OUT}(i)$ satisfies the relationship of:

$$GL_{OUT}(i) = \zeta_M \times GL_{IN}(i) \leq N,$$

so that no color shift occurs in the output image.

In one embodiment, the LUT comprises a plurality of grey level values and a plurality of color shift compensation coefficients, where each color shift compensation coefficient is associated with a corresponding grey level value such that the result of which the color shift compensation coefficient multiples the corresponding grey level value is less than or equals to N.

Furthermore, the method includes the step of modifying the color shift compensation coefficient so as to obtain a sharpness enhancing coefficient, SPEC, that satisfies the relationship of:

$$SPEC = \zeta_M \times SP\_ratio,$$

where SP_ratio is a sharpness ratio for the image.

Moreover, the method may includes the step of transforming the image from the first color domain into a second color domain that is different from the first color domain, where the second color domain comprises one of a YCbCr domain, a CMYK domain, an YUV domain, and a CIE XYZ domain.

Additionally, the method also includes the steps of applying the sharpness enhancing coefficient SPEC to the transformed image in the second color domain to obtain issue free image data in the second color domain, and transforming the issue free image data in the second color domain into the first color domain to obtain a set of output RGB data of the image.

In another aspect, the present invention relates to a method of processing images in an LCD. In one embodiment, the method includes the steps of processing an image having a plurality of image pixels expressed in grey level values, $GL_{IN}(i)$, of n bits in a red-green-blue (RGB) color domain so as to obtain the maximum gray level value, MAX(R, G, B), among the gray level values of all RGB colors of the plurality of image pixels, where $GL_{IN}(i) = 0, 1, ...$ or N, i = R, G or B, N = $(2^n-1)$, n is an integer greater than zero, determining a color shift compensation coefficient, $\xi_M$, according to the maximum gray level value MAX(R, G, B) of the image such that $\xi_M \times MAX(R, G, B) \leq N$, and transforming the image into an output image having grey level values, $GL_{OUT}(i)$, that satisfies the relationship of:

$$GL_{OUT}(i) = \zeta_M \times GL_{IN}(i) \leq N.$$

In one embodiment, the method may further have the step of creating a look up table (LUT) that comprises a plurality of grey level values and a plurality of color shift compensation coefficients, where each color shift compensation coefficient is associated with a corresponding grey level value such that the result of which the color shift compensation coefficient multiples the corresponding grey level value is less than or equals to N.

In one embodiment, the step of determining the color shift compensation coefficient $\xi_M$ is performed by looking up the LUT.

In yet another aspect, the present invention relates to an image signal processing system usable in an LCD. In one embodiment, the image signal processing system has a data filter module for receiving an image having a plurality of image pixels expressed in grey level values, $GL_{IN}(i)$, of n bits in a red-green-blue (RGB) color domain, and determining the maximum gray level value, MAX(R, G, B), among the gray level values of all RGB colors of the plurality of image pixels, where $GL_{IN}(i) = 0, 1, ...$ or N, i = R, G or B, N = $(2^n-1)$, n is an integer greater than zero, and a color shift solution module coupled with the data filter module for creating a look up table (LUT) that comprises a plurality of grey level values and a plurality of color shift compensation coefficients, where each color shift compensation coefficient is associated with a corresponding grey level value such that the result of which the color shift compensation coefficient multiples the corresponding grey level value is less than or equals to N.

In operation, when the maximum gray level value MAX(R, G, B) of the image is obtained, a color shift compensation coefficient, $\xi_M$, is determined from the LUT according to the maximum gray level value MAX(R, G, B), which is applied to the grey level value $GL_{IN}(i)$ of the image so as to obtain output gray level values $GL_{OUT}(i)$ of the image, where $GL_{OUT}(i)$ satisfies the relationship of:

$$GL_{OUT}(i) = \zeta_M \times GL_{IN}(i) \leq N,$$

so that no color shift occurs in the output image.

In one embodiment, the image signal processing system further has a sharpness enhancing module coupled with the color shift solution module for modifying the plurality of color shift compensation coefficients and obtaining a plurality of sharpness enhancing coefficients accordingly, where each sharpness enhancing coefficient is the result of which a corresponding color shift compensation coefficient multiples a sharpness ratio.

Furthermore, the image signal processing system includes a first color domain transformation module coupled with the data filter module for transforming the image from the first color domain into a second color domain that is different from the first color domain, where the second color domain comprises one of an YCbCr domain, a CMYK domain, an YUV domain, and a CIE XYZ domain.

Moreover, the image signal processing system includes a luminance modification module for applying the sharpness enhancing coefficients to the transformed image in the second color domain to obtain issue free image data in the second color domain.

Additionally, the image signal processing system includes a second color domain transformation module coupled with the first color domain transformation module and the luminance modification module for transforming the issue free image data in the second color domain into the first color domain to obtain a set of output RGB data of the image.

These and other aspects of the present invention will become apparent from the following description of the preferred embodiment taken in conjunction with the following drawings, although variations and modifications therein may be affected without departing from the spirit and scope of the novel concepts of the disclosure.

## BRIEF DESCRIPTION OF THE DRAWINGS

The accompanying drawings illustrate one or more embodiments of the invention and, together with the written description, serve to explain the principles of the invention. Wherever possible, the same reference numbers are used throughout the drawings to refer to the same or like elements of an embodiment, and wherein:

Fig. 1 shows schematically a block diagram of an image processing system usable in an LCD device according to one embodiment of the present invention;

Fig. 2 shows schematically a block diagram of an image processing system usable in an LCD device according to another embodiment of the present invention;

Fig. 3 shows schematically a transforming relationship between the input grey level and the output grey level of an image according to one embodiment of the present invention;

Fig. 4 shows color shift stimulations of an image according to one embodiment of the present invention: (a) and (b) for different grey levels; and

Fig. 5 shows schematically a conventional transforming relationship between the input grey level and the output grey level of an image: (a) for low grey levels and (b) for high grey levels.

## DETAILED DESCRIPTION OF THE INVENTION

The present invention is more particularly described in the following examples that are intended as illustrative only since numerous modifications and variations therein will be apparent to those skilled in the art. Various embodiments of the invention are now described in detail. Referring to the drawings, like numbers indicate like components throughout the views. As used in the description herein and throughout the claims that follow, the meaning of "a", "an", and "the" includes plural reference unless the context clearly dictates otherwise. Also, as used in the description herein and throughout the claims that follow, the meaning of "in" includes "in" and "on" unless the context clearly dictates otherwise.

The terms used in this specification generally have their ordinary meanings in the art, within the context of the invention, and in the specific context where each term is used. Certain terms that are used to describe the invention are discussed below, or elsewhere in the specification, to provide additional guidance to the practitioner regarding the description of the invention. The use of examples anywhere in this specification, including examples of any terms discussed herein, is illustrative only, and in no way limits the scope and meaning of the invention or of any exemplified term. Likewise, the invention is not limited to various embodiments given in this specification.

As used herein, the terms "grey level" and "grey scale" are synonym in the specification and refer to one of (discrete) shades of grey for an image, or an amount of light perceived by a human for the image. If the brightness of the image is expressed in the form of shades of grey in n bits, n being an integer greater than zero, the grey level takes values from zero up to $(2^n - 1)$ with intermediate values representing increasingly light shades of grey. In an LCD device, the amount of light that transmits through liquid crystals is adjusted to represent the gray level.

As used herein, the terms "comprising," "including," "having," "containing," "involving," and the like are to be understood to be open-ended, i.e., to mean including but not limited to.

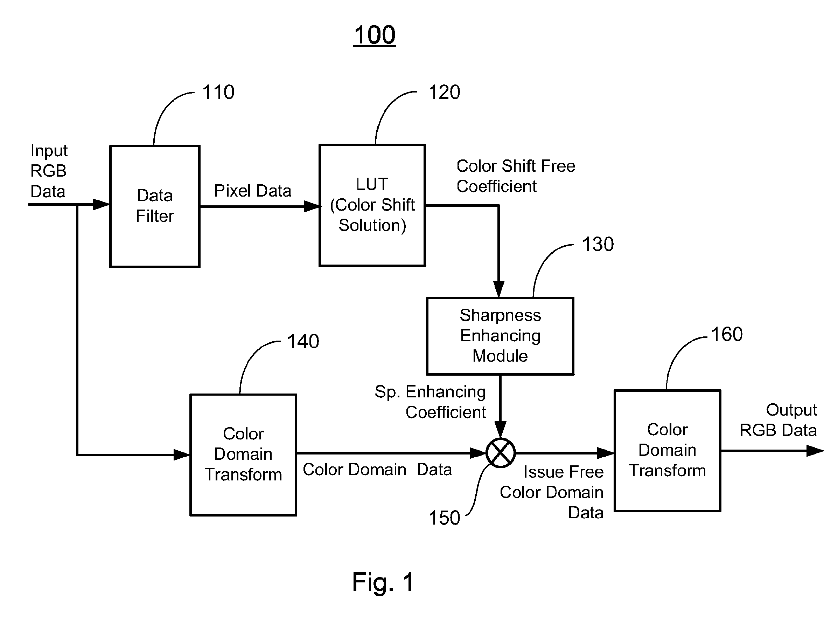

The description will be made as to the embodiments of the present invention in conjunction with the accompanying drawings in Figs. 1-4. In accordance with the purposes of this invention, as embodied and broadly described herein, this invention, in one aspect, relates to a method of processing an image to be displayed in an LCD with color shift free and an image signal processing system of implementing the same.

Referring to Fig. 1, the image signal processing system 100 has a data filter module 110, a color shift solution module 120 coupled with the data filter module 110, a sharpness enhancing module 130 coupled with the color shift solution module 120, a first color domain transformation module 140 coupled with the data filter module 110, a luminance modification module 150 coupled with the sharpness enhancing module 130 and the first color domain transformation module 140, and a second color domain transformation module 160 coupled with the luminance modification module 150.

The data filter module 110 is adapted for receiving an input image having a plurality of image pixels expressed in grey level values, $GL_{IN}(i)$, of n bits in an RGB color domain, and determining the maximum gray level value, $MAX(R, G, B)$, among the gray level values of all RGB colors of the plurality of image pixels, where $GL_{IN}(i) = 0, 1, ...$ or $N$, $i = R, G$ or $B$, $N = (2^n-1)$, n is an integer greater than zero.

The color shift solution module 120 is adapted for creating a look up table (LUT) that comprises a plurality of grey level values and a plurality of color shift compensation coefficients, where each color shift compensation coefficient is associated with a corresponding grey level value such that the result of which the color shift compensation coefficient multiples the corresponding grey level value is less than or equals to N.

In one embodiment, the color shift compensation coefficient is calculated in the form of:

$$CS\_coefficient\ (\zeta_M) = GLT(Pixel\_Data)\ /\ Pixel\_Data.$$

Where GLT(X) is the transfer function $GL_{OUT}(i) = \xi_M \times GL_{IN}(i) \le N$, and Pixel_Data is the input data $GL_{IN}(i)$.

The LUT is utilized to convert an input grayscale level into a desirable output grayscale level. The LUT provided in the display device is prepared for each of RGB colors. In operation, when the maximum gray level value MAX(R, G, B) of the image is obtained, a color shift compensation coefficient, $\xi_M$, is determined from the LUT according to the maximum gray level value MAX(R, G, B), which is applied to the grey level value $GL_{IN}(i)$ of the image so as to obtain output gray level values $GL_{OUT}(i)$ of the image, where $GL_{OUT}(i)$ satisfies the relationship of:

$$GL_{OUT}(i) = \zeta_M \times GL_{IN}(i) \le N,$$

so that no color shift occurs in the output image.

The sharpness enhancing module 130 is adapted for modifying the plurality of color shift compensation coefficients and obtaining a plurality of sharpness enhancing coefficients accordingly. Each sharpness enhancing coefficient is the result of which a corresponding color shift compensation coefficient multiples a sharpness ratio.

The first color domain transformation module 140 is adapted for transforming the image from the first color domain into a second color domain that is different from the first color domain. The second color domain can be an YCbCr domain, a CMYK domain, a YUV, a CIE XYZ domain, or the likes.

The luminance modification module 150 is adapted for applying the sharpness enhancing coefficients to the transformed image in the second color domain to obtain issue free image data in the second color domain.

The second color domain transformation module 160 is adapted for transforming the issue free image data in the second color domain into the first color domain to obtain a set of output RGB data of the image.

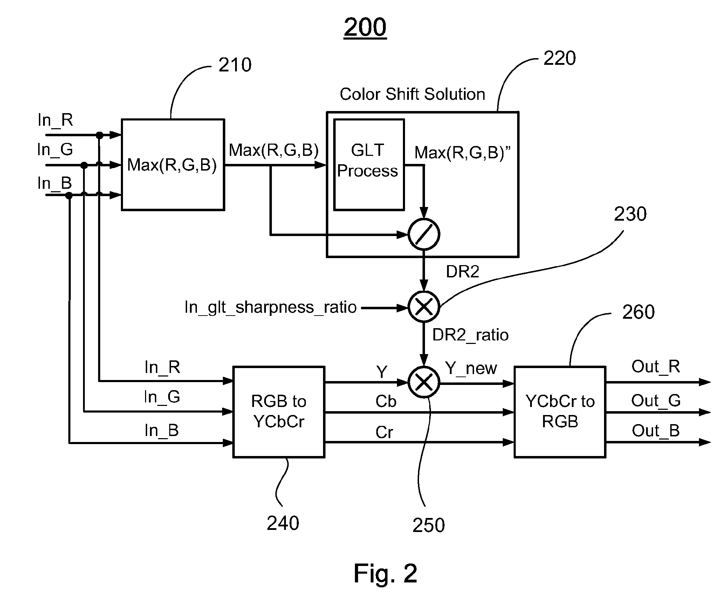

Fig. 2 shows another embodiment of the image signal processing system 200 according to the present invention. Similar to the image signal processing system 100 shown in Fig. 1, the data filter module 210 is used to calculate the maximum gray level value, MAX(R, G, B), among the gray level values of all RGB colors of the plurality of image pixels from the input image data, In_R, In_G and In_B. Then, by looking up the LUT in the color shift solution model 220, it is obtained a color shift compensation coefficient $\xi_M$ that is corresponding to the maximum gray level value MAX(R, G, B) of the image. The output grey levels of the image are obtained by multiplying the input grey levels of the image by the color shift compensation coefficient $\xi_M$. Accordingly, no color shift occurs after the grey level transformation according to the present invention.

Further, a sharpness enhancing module 230 may be employed to modify the color shift compensation coefficient to enhance and keep the details of the image, so as to obtains a sharpness coefficient, SP_coefficient,

$$SP\_coefficient = CS\_coefficient \times sharpness\_ratio.$$

Additionally, a RGB to YCbCr color domain transformation module 240 is used to transform the input image data, In_R, In_G and In_B, into Y, Cb and Cr, where Y is the luminance component and Cb and Cr are the blue-difference and red-difference chroma components of the image.

The transformed luminance component Y is then modulated by the sharpness coefficient, SP_coefficient, in a luminance modification module 250 to obtain a new luminance component Y_new, for further enhancing the quality of the image.

Then, a YCbCr to RGB color domain transformation module 260 is adapted to transform the image data, Y_new, Cb and Cr in the YCbCr color domain back to the output image data, Out_R, Out_G and Out_B in the RGB color domain, which is color shift free.

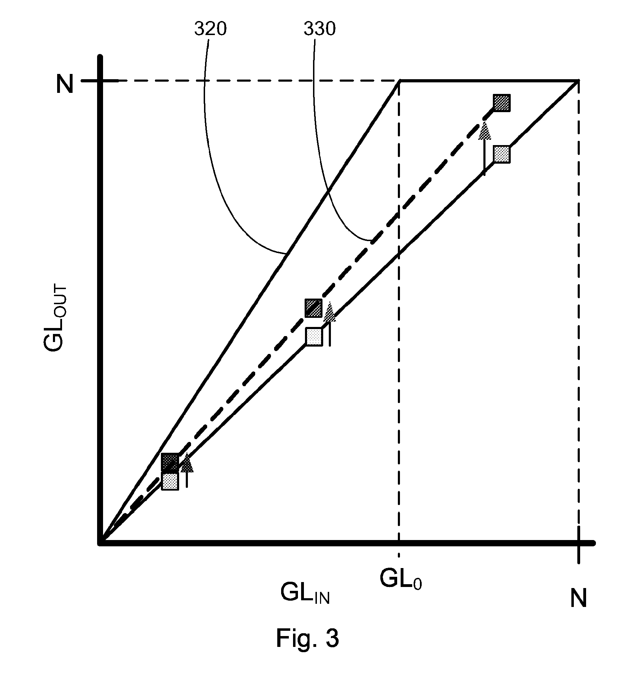

Fig. 3 shows a transforming relationship 330 between the input grey level $GL_{IN}$ and the output grey level $GL_{OUT}$ of an image according to one embodiment of the present invention. The output grey level $GL_{OUT}$ is obtained by multiplying the input grey level $GL_{IN}$ by the color shift compensation coefficient $\xi_M$. As a comparison, a transforming relationship 320 between the input grey level $GL_{IN}$ and the output grey level $GL_{OUT}$ of an image according to a conventional method is also shown in Fig. 3. According to the present invention, no color shift (grey level overflow) occurs. However, in the conventional method, any input grey level larger then $GL_0$ would be overflowed after this transformation.

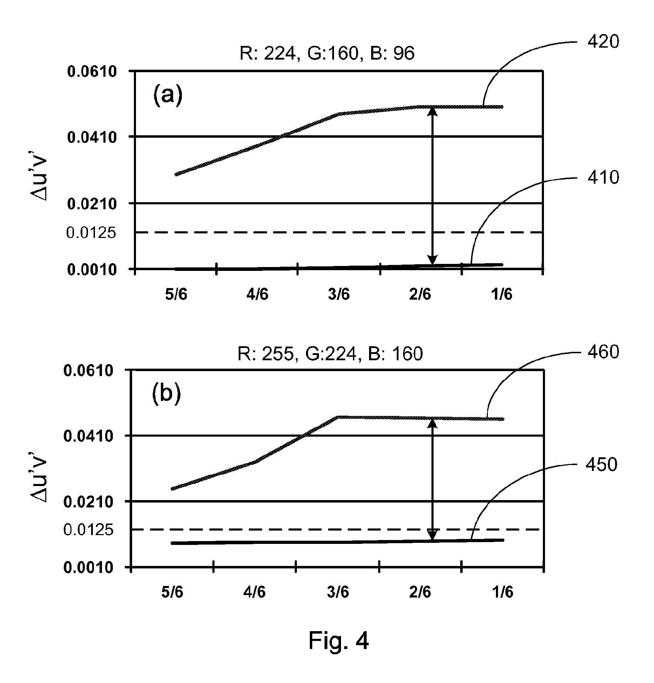

Fig. 4 shows color shift stimulations of an image: (a) for the grey level values, R: 224, G: 160 and B: 96, and (b) the grey level values, R: 255, G: 224 and B: 160. Curves 410 and 450 are obtained according to the present invention, where the color difference error $\Delta u'v'$ is less than 0.0125, which indicate no color shift occurs. However, curves 420 and 460 are obtained according to a conventional transformation, which causes color shift.

One aspect of the present invention provides a method of processing images in an LCD. In one embodiment, the method includes the following steps: at first, an image to be displayed on the LCD is input or provided. The input image is characterized with a plurality of image pixels. Each image pixel is expressed in a first color domain characterized with red, green and blue (RGB) colors, and each color is expressed in a grey level value, $GL_{IN}(i)$, of n bits, where $GL_{IN}(i)$ = 0, 1, ... or N, i = R, G or B, N = $(2^n-1)$, and n is an integer greater than zero. Then, the maximum gray level value, MAX(R, G, B), among the gray level values of all RGB colors of the plurality of image pixels is determined.

Next, a color shift compensation coefficient, $\xi_M$, corresponding to the maximum gray level value MAX(R, G, B) is selected from a lookup table (LUT), where $\xi_M \times$MAX(R, G, B) $\leq$ N. The LUT comprises a plurality of grey level values and a plurality of color shift compensation coefficients, where each color shift compensation coefficient is associated with a corresponding grey level value such that the result of which the color shift compensation coefficient multiples the corresponding grey level value is less than or equals to N.

The grey level value $GL_{IN}(i)$ of the input image is then transformed into a grey level value, $GL_{OUT}(i)$, of an output image, where $GL_{OUT}(i)$ satisfies the relationship of:

$$GL_{OUT}(i) = \zeta_M \times GL_{IN}(i) \leq N,$$

so that no color shift occurs in the output image.

Furthermore, the method includes the step of modifying the color shift compensation coefficient so as to obtain a sharpness enhancing coefficient, SPEC, that satisfies the relationship of:

$$SPEC = \zeta_M \times SP\_ratio,$$

where SP_ratio is a sharpness ratio for the image.

Moreover, the method may include the step of transforming the image from the first color domain into a second color domain that is different from the first color domain.

Additionally, the method also includes the steps of applying the sharpness enhancing coefficient SPEC to the transformed image in the second color domain to obtain issue free image data in the second color domain, and transforming the issue free image data in the second color domain into the first color domain to obtain a set of output RGB data of the image.

The present invention, among other things, recites a method of processing an image to be displayed in a liquid crystal display (LCD) with color shift free and an image signal processing system of implementing the same.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to activate others skilled in the art to utilize the invention and various embodiments and with various modifications as are suited to the particular use contemplated. Alternative embodiments will become apparent to those skilled in the art to which the present invention pertains without departing from its spirit and scope. Accordingly, the scope of the present invention is defined by the appended claims rather than the foregoing description and the exemplary embodiments described therein.

**Claims**

1. A method of processing images in a liquid crystal display (LCD), comprising the steps of:

(a) inputting an image to be displayed on the LCD, wherein the input image comprises a plurality of image pixels, each image pixel is expressed in a first color domain **characterized** with red, green and blue (RGB) colors, and each color is expressed in a grey level value, $GL_{IN}(i)$, of n bits, wherein $GL_{IN}(i) = 0, 1, ...$ or N, i = R, G or B, $N = (2^n-1)$, and n is an integer greater than zero;

(b) determining the maximum gray level value, MAX(R, G, B), among the gray level values of all RGB colors of the plurality of image pixels;

(c) selecting a color shift compensation coefficient, $\xi_M$, corresponding to the maximum gray level value MAX(R, G, B) from a lookup table (LUT), wherein $\xi_M \times MAX(R, G, B) \leq N$; and

(d) transforming the grey level value $GL_{IN}(i)$ of the input image into a grey level value, $GL_{OUT}(i)$, of an output image, wherein $GL_{OUT}(i)$ satisfies the relationship of:

$$GL_{OUT}(i) = \zeta_M \times GL_{IN}(i) \leq N,$$

so that no color shift occurs in the output image.

2. The method of claim 1, wherein the LUT comprises a plurality of grey level values and a plurality of color shift compensation coefficients, wherein each color shift compensation coefficient is associated with a corresponding grey level value such that the result of which the color shift compensation coefficient multiples the corresponding grey level value is less than or equals to N.

3. The method of claim 1, further comprising the step of modifying the color shift compensation coefficient so as to obtain a sharpness enhancing coefficient, SPEC, that satisfies the relationship of:

$$SPEC = \zeta_M \times SP\_ratio,$$

wherein SP_ratio is a sharpness ratio for the image.

4. The method of claim 3, further comprising the step of transforming the image from the first color domain into a second color domain that is different from the first color domain, wherein the second color domain comprises one of a YCbCr domain, a CMYK domain, an YUV domain, and a CIE XYZ domain.

5. The method of claim 4, further comprising the step of applying the sharpness enhancing coefficient SPEC to the transformed image in the second color domain to obtain issue free image data in the second color domain.

6. The method of claim 5, further comprising the steps of transforming the issue free image data in the second color domain into the first color domain to obtain a set of output RGB data of the image.

7. A method of processing images in a liquid crystal display (LCD), comprising the steps of:

(a) processing an image having a plurality of image pixels expressed in grey level values, $GL_{IN}(i)$, of n bits in a red-green-blue (RGB) color domain so as to obtain the maximum gray level value, MAX(R, G, B), among the gray level values of all RGB colors of the plurality of image pixels, wherein $GL_{IN}(i) = 0, 1, ...$ or N, i = R, G or B, $N = (2^n-1)$, n is an integer greater than zero;

(b) determining a color shift compensation coefficient, $\xi_M$, according to the maximum gray level value MAX(R, G, B) of the image such that

$$\zeta_M \times MAX(R, G, B) \leq N;$$

and

(c) transforming the image into an output image having grey level values, $GL_{OUT}(i)$, that satisfies the relationship of:

$$GL_{OUT}(i) = \zeta_M \times GL_{IN}(i) \le N.$$

8. The method of claim 7, further comprising the step of creating a look up table (LUT) that comprises a plurality of grey level values and a plurality of color shift compensation coefficients, wherein each color shift compensation coefficient is associated with a corresponding grey level value such that the result of which the color shift compensation coefficient multiples the corresponding grey level value is less than or equals to N, wherein the step of determining the color shift compensation coefficient $\xi_M$ is performed by looking up the LUT.

9. An image signal processing system usable in a liquid crystal display (LCD), comprising:

   (a) a data filter module for receiving an image having a plurality of image pixels expressed in grey level values, $GL_{IN}(i)$, of n bits in a red-green-blue (RGB) color domain, and determining the maximum gray level value, MAX (R, G, B), among the gray level values of all RGB colors of the plurality of image pixels, wherein $GL_{IN}(i) = 0$, 1, ... or N, i = R, G or B, N = $(2^n-1)$, n is an integer greater than zero; and
   (b) a color shift solution module coupled with the data filter module for creating a look up table (LUT) that comprises a plurality of grey level values and a plurality of color shift compensation coefficients, wherein each color shift compensation coefficient is associated with a corresponding grey level value such that the result of which the color shift compensation coefficient multiples the corresponding grey level value is less than or equals to N.

10. The image signal processing system of claim 9, wherein in operation, when the maximum gray level value MAX(R, G, B) of the image is obtained, a color shift compensation coefficient, $\xi_M$, is determined from the LUT according to the maximum gray level value MAX(R, G, B), which is applied to the grey level value $GL_{IN}(i)$ of the image so as to obtain output gray level values $GL_{OUT}(i)$ of the image, wherein $GL_{OUT}(i)$ satisfies the relationship of:

$$GL_{OUT}(i) = \zeta_M \times GL_{IN}(i) \le N,$$

so that no color shift occurs in the output image.

11. The image signal processing system of claim 9, further comprising a sharpness enhancing module coupled with the color shift solution module for modifying the plurality of color shift compensation coefficients and obtaining a plurality of sharpness enhancing coefficients accordingly.

12. The image signal processing system of claim 11, wherein each sharpness enhancing coefficient is the result of which a corresponding color shift compensation coefficient multiples a sharpness ratio.

13. The image signal processing system of claim 11, further comprising a first color domain transformation module coupled with the data filter module for transforming the image from the first color domain into a second color domain that is different from the first color domain, wherein the second color domain comprises one of an YCbCr domain, a CMYK domain, an YUV domain, and a CIE XYZ domain.

14. The image signal processing system of claim 13, further comprising a luminance modification module for applying the sharpness enhancing coefficients to the transformed image in the second color domain to obtain issue free image data in the second color domain.

15. The image signal processing system of claim 14, further comprising a second color domain transformation module coupled with the first color domain transformation module and the luminance modification module for transforming the issue free image data in the second color domain into the first color domain to obtain a set of output RGB data of the image.

Fig. 1

EP 2 309 483 A1

**200**

Fig. 2

EP 2 309 483 A1

Fig. 3

Fig. 4

EP 2 309 483 A1

Fig. 5 (Related Art)

Europäisches
Patentamt

European
Patent Office

Office européen
des brevets

## EUROPEAN SEARCH REPORT

Application Number

EP 10 15 3385

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/080975 A1 (YAMASHITA HARUO [JP] ET AL) 12 April 2007 (2007-04-12) * abstract * * paragraphs [0002], [0034] * * paragraphs [0150] - [0164], [0181] - [0187], [0189]; figures 1-9 * * paragraphs [0201] - [0209], [0223]; figure 10 * | 1-15 | INV. G09G3/36 G09G5/04  ADD. G09G5/06 |
| X | JP 2004 180090 A (MITSUBISHI ELECTRIC CORP) 24 June 2004 (2004-06-24) * abstract * * figures 1,3,4 * | 1-3,7-12 | |

TECHNICAL FIELDS
SEARCHED      (IPC)

G09G
H04N

The present search report has been drawn up for all claims

| Place of search | Date of completion of the search | Examiner |
|---|---|---|
| Munich | 10 January 2011 | Adarska, Veneta |

EPO FORM 1503 03.82 (P04C01)

## ANNEX TO THE EUROPEAN SEARCH REPORT
## ON EUROPEAN PATENT APPLICATION NO.

EP 10 15 3385

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2011

| Patent document cited in search report | | Publication date | Patent family member(s) | | Publication date |
|---|---|---|---|---|---|
| US 2007080975 | A1 | 12-04-2007 | JP 4440328 B2 | | 24-03-2010 |
| | | | JP 2009246982 A | | 22-10-2009 |
| | | | JP 2009232468 A | | 08-10-2009 |
| | | | US 2010157115 A1 | | 24-06-2010 |
| JP 2004180090 | A | 24-06-2004 | NONE | | |

For more details about this annex : see Official Journal of the European Patent Office, No. 12/82